Europäisches Patentamt

European Patent Office

Office européen des brevets

(19)

(11) Publication number: **0 031 403**
**B1**

(12) **EUROPEAN PATENT SPECIFICATION**

(45) Date of publication of patent specification: **02.11.83**

(51) Int. Cl.³: **G 06 F 1/04**

(21) Application number: **80105792.8**

(22) Date of filing: **25.09.80**

(54) **Data processing apparatus including a time of day clock.**

(30) Priority: **28.12.79 US 107811**

(43) Date of publication of application:
**08.07.81 Bulletin 81/27**

(45) Publication of the grant of the patent:
**02.11.83 Bulletin 83/44**

(84) Designated Contracting States:
**DE FR GB IT**

(56) References cited:
**US - A - 3 895 486**

**IBM TECHNICAL DISCLOSURE BULLETIN, vol.
17, no. 7, December 1974, NEW YORK (US),
DUKE: "Regulation of time of day clock" pages
2043-2045**
**IBM TECHNICAL DISCLOSURE BULLETIN, vol.
13, no. 8, January 1971, NEW YORK (US),
HASLAM: "Timer for data processing systems"
pages 2429-2430**

(73) Proprietor: **International Business Machines
Corporation
Old Orchard Road
Armonk, N.Y. 10504 (US)**

(72) Inventor: **Chang, David C.
P.O. Box 162
Pleasant Valley, New York 12569 (US)**

(74) Representative: **Grant, Iain Murray
IBM United Kingdom Patent Operations
Hursley Park, Winchester, Hants,
SO21 2JN (GB)**

# Date processing apparatus including a time of day clock

The present invention relates to data processing apparatus including a time of day clock.

In a computer, the time of day (TOD) clock is basically a counter which provides a consistent measure of elapsed time suitable for the indication of date and time. Usually, the time of day clock has a binary register with a number of bit positions that is determined by the elapsed time capacity and the resolution of the counter. Time is measured by incrementing the count stored in this register following rules for fixed point arithmetic. In the basic form, the register is incremented by adding one to a particular bit position every fixed period of time. For instance, say that you had a 51 position counter with an elapsed time capacity of 143 years, the 51st position would be incremented once every microsecond. In models of the same elapsed time capacity but with higher or lower resolution, a lower or higher order bit position is incremented so that the rate of advancement of the clock is the same as if a 1 was added to position 51 every microsecond.

It has been suggested in an article entitled "Regulation of the Time of Day Clock" by Duke which appeared in the December 1974 issue of the IBM Technical Disclosure Bulletin, beginning on page 2043, that the time of day clock be run in synchronism with the processor clock which is basically a regular pulse generator by incrementing the time of day clock by a fixed amount every cycle of the processor clock. Typically, the fixed amount is not a whole number or integer so that it had to be synthesized. For instance, if the TOD clock is required to count to 4096 every microsecond using a 25 ns processor clock, 102.4 must be added to the count of the TOD clock in each cycle of the system clock. This can be achieved by adding 103 to the count of the TOD clock for every 4 out of 10 cycles of the processor clock and 102 to the count for the remainder of the 10 cycles. Because the system clock is imprecise, it is checked against a standard clock and the ratio of high to low counts is changed to keep the TOD clock within its precision standard. For instance, for a reduction of .120 in the 25 ns processor clock, the time of day counts must be incremented by 103 for .5 out of every 10 cycles.

In an article entitled "Timer for Data Processing Systems" by Haslam et al, which appeared on pages 2429 and 2430 of the IBM Technical Disclosure Bulletin, Vol 13, No. 8 in January 1971, there is disclosed data processing apparatus operative in cycles of duration T under the control of a processor clock and including a time of day clock counting in intervals of notional duration D and driven by the processor clock via control logic, which includes a resettable counter responsive to the processor clock for generating a cumulative count of the processor clock pulses since last reset, to produce, in a period of K consecutive processor clock cycles, N time of day clock counting intervals each of (N—X) of which correspond to R consecutive processor clock cycles and each of X of which correspond to an integral number other than R consecutive processor clock cycles, where $ND=KT$ and $D=(R\pm X/N)T$, N, D, K, T, R, X being positive integers and R being the closest integer to D/TX.

In this prior art apparatus the resettable counter and the TOD clock are concatenated. Reset lines are provided whereby the resettable counter is normally reset to zero when it overflows (i.e. every R counts), but is reset to a different value each time N counts have been accumulated by the TOD clock. Only one correction is possible in a series of N counts of the TOD clock.

In accordance with the present invention, data processing apparatus of the aforementioned type is characterised in that the control logic also includes a logic function generator responsive to the low order contents of the time of day clock, which define a number at least equal to N, for generating one output value for (N—X) of the counts and a different output value for X other of the counts and a comparator responsive to the output count of the resettable counter and the output value of the logic function generator to generate a compare equal signal (as appropriate) of the two outputs, such signal resetting the resettable counter to its initial state and advancing the contents of the time of day clock by one unit.

In other words, the time of day clock is incremented only in response to a significant output from the comparator. The logic function generator can be rendered externally adjustable.

By such an arrangement, a very flexible scheme is provided for operating the time of day clock off the same pulse source as the processor clock without reference to a time standard for checking the pulse source. The arrangement is not limited to a single correction in a series of $N(N=KT/D)$ counts of the TOD clock.

In effect what is provided is a new clocking scheme for the two clocks which is capable of being practical, efficient, inexpensive and accurate.

The present invention will be illustrated further by way of example with reference to an embodiment thereof as illustrated in the accompanying drawings in which:—

Figure 1 is a schematic diagram of the control logic of the embodiment and

Figure 2 is a timing diagram illustrating the pulse scheme for selecting the number of pulses.

Let us assume that the time of day clock has a capacity of 143 years and the required precision (.005%) of the time of day clock dictates that the time of day register be 55 stages and thus be stepped every 62.5 ns. Furthermore, let us assume the processor cycle time objective is 22 NS±.5 and its accuracy $\Delta T/T$ is technology limited to the order of say .5%. As pointed out previously, the plan is to effect synchronism between the two clocks by constraining the CPU cycle such that a certain large binary multiple, N, of the TOD unit cycle D, contains an integral number of CPU cycles, T or ND=KT. To meet the constraints set forth above, the present invention varies the length of certain of the time of day unit cycles as set forth in the following equation:

$$D=(R\pm\frac{X}{N})T \qquad\qquad (1)$$

The following expressions follow from that equation (1):

Cycle Time:
$$T=\frac{ND}{RN+X} \qquad\qquad (2)$$

Resolution:
$$\frac{\Delta T}{T}=\frac{T}{ND} \qquad\qquad (3)$$

Modified Cycles:
$$X=N(\frac{D}{T}-R) \qquad\qquad (4)$$

Applying these equation to the assumed constraints R can be calculated.

$$\frac{D}{T}=\frac{62.5}{22}=2.84$$

$$R=Round\ of\ 2.84=3.$$

For .5% accuracy, N will be:

$$.005=\frac{1}{RN}, N=66.6\ 64\ (Binary)$$

Now X can be calculated:

$$X=(N(\frac{D}{T}-R)=64(2.84-3)=-10.24\ -10.$$

The above says that the minimum segment satisfying the integral relationship is 64 TOD units, 10 of which are of modified size, containing 1 or 2 CPU cycles, the remainder are full size which is 3 CPU cycles.

The actual CPU cycle will be:

$$T=\frac{64\times62.5}{3\times6410}=21.978\ NS.$$

The objective now is to generate a control which will step the time of day counter once every three cycles of the processor clock for 54 of 64 cycles of the TOD clock and once every two cycles of the processor clock for the remaining 10 of the 64 cycles of the TOD clock. The apparatus shown will not only do that, it will also generate various other combinations of long and short cycles to step the time of day counter. As shown, register 10 of the time of day clock is driven by incrementer 12. The incrementer 12 steps the register through its various positions in accordance with binary fixed point mathematics when triggered by a pulse from a comparator 14 every time the count of a two bit binary counter 16 stepped by the CPU clock matches the output of a calculator 18. For instance, if the output of the calculator 18 is a binary 10 when the count in the counter reaches 10, the comparator provides a compare signal to the incrementer 12 which then adds a binary 1 to the count stored in the TOD register 10.

A register 20 in the counter 16 is incremented one position by incrementer 22 of each time there is a pulse from the CPU clock until there is a compare signal from comparator 14. The compare signal results in resetting the register 20 to zero on the occurrence of the next pulse from the CPU clock.

3

Therefore, so long as the output of the calculator is binary 10 a binary 1 will be added to the total of the register 10 every three pulses of the CPU clock. However, the output of the calculator 18 changes with the count in places 50 to 55 of the time of day register 10 to provide the combination of long and short cycles mentioned previously.

The digits 50 through 55 of register 10 are fed into a decoder 28. The output lines 0 to 4 of the decoder 28 each carry one logic function of two or more of the digits 50 through 55. Each of the output lines is gated by one of the digits 1 through 5 of register 29 in a 5 way AND/OR gate 30. So long as no output line 0 to 4 of the decoder 28 is at a level to match with any binary 1 digit placed in a corresponding locations 1 through 5 of the register 29, the output of the gate 30 is non-significant producing a no-match signal ($\overline{M}$) by means of inverter 32 to gate a binary (10) signal into the comparator 10. Whenever any output of the decoder 28 matches a corresponding digit 1 through 4 in the register 29, the gate 30 issues a significant match signal M and either AND gate 34 or 36 is activated. Whether AND gate 34 or 36 is activated will depend on the number placed in the 0 position of the register 29. If the number is a 1, AND gate 34 is activated gating the binary number 1 into comparator. If the number is 0, gate 36 is activated gating the binary number 01 into the comparator.

In line with the previous calculations, the binary number (10) is to be selected on 54 of the 64 possible counts of the digits 50 to 55 and the binary number (01) selected in the remaining 10 counts. This is accomplished by placing the binary number 01010 in digits 1 to 5 of the register 29 and placing a binary 0 in position 0 of register 29. As shall be seen hereafter decoder 29 is functioned so that a binary 1 occurs in either position 1 or position 3 of its output 10 of the possible 64 counts of locations 50 through 55 of the register 10 and are both binary 0 for all other possible counts of positions 50 to 54.

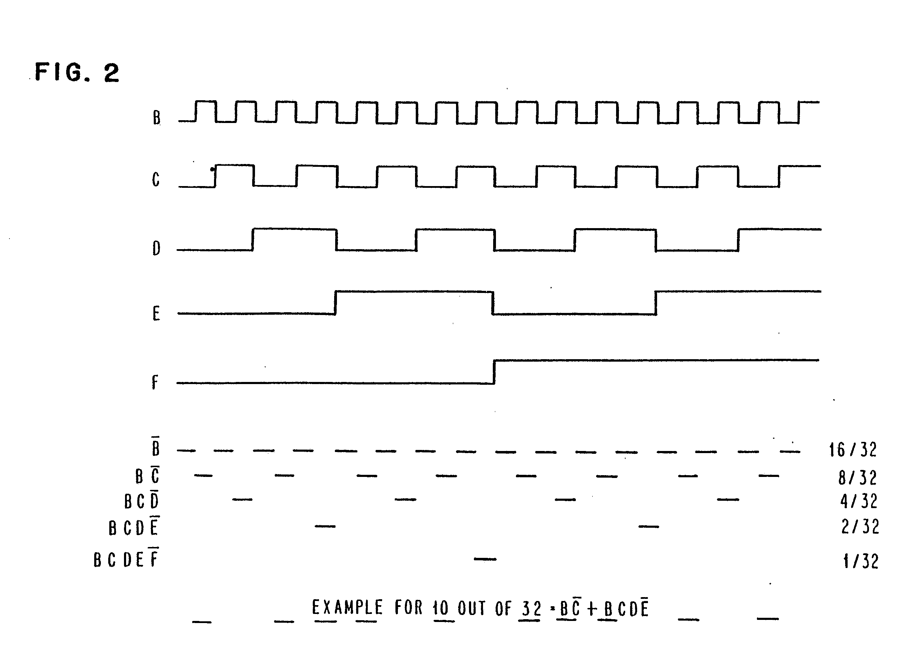

In Figure 2 curves B to F are the duty cycles for the positions 54 to 50 in ascending order. The duty cycles of various combinations of B to F are also shown along with a function indicating how many times they occur in the possible 32 combinations of B to F. Finally, the duty cycle of the logic function $B\overline{C}+BCD\overline{E}$ is shown to occur 10 times in the 32 counts. Thus, the function $M=A(B\overline{C}+BCD\overline{E})$ occurs 10 times in the 64 possible counts.

TABLE 1

| Duty cycle (per 64) | Function | x=10 | Dec. output pos. |
|---|---|---|---|
| 16 | A . $\overline{B}$ | 0 | 0 |
| 8 | A . B$\overline{C}$ | 1 | 1 |
| 4 | A . BC$\overline{D}$ | 0 | 2 |
| 2 | A . BCD$\overline{E}$ | 1 | 3 |
| 1 | A . BCDE$\overline{F}$ | 0 | 4 |

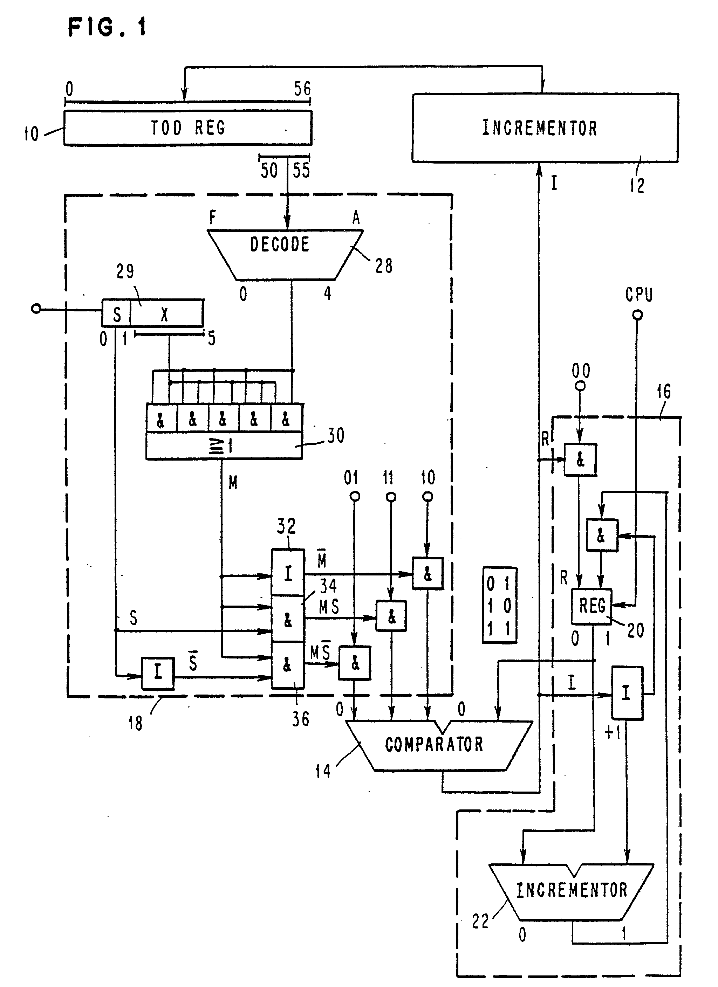

This function M can be used directly to select between the (10) and (01) inputs. When the function M comes up, (01) is selected, otherwise (10) is selected. In the embodiment of Figure 1 the decoder 28 generates each of the binary functions listed in table 1 and places one of them on each of the output positions 1 to 4 as indicated. These output are fed into the AND gate 30 to be selected by the value placed in register 29 as described previously.

**Claims**

1. Data processing apparatus operative in cycles of duration T under the control of a processor clock and including a time of day clock (10) counting in intervals of notional duration D and driven by the processor clock via control logic (14, 16, 18), which includes a resettable counter responsive to the processor clock for generating a cumulative count of the processor clock pulses since last reset, to produce, in a period of K consecutive processor clock cycles, N time of day clock counting intervals each of (N—X) of which correspond to R consecutive processor clock cycles and each of X of which correspond to an integral number other than R consecutive processor clock cycles, where ND=KT and D=(R±X/N)T, N, D, K, T, R, X being positive integers and R being the closest integer to D/T, characterized in that the control logic also includes a logic function generator (18) responsive to the low order contents of the time of day clock, which define a number at least equal to N, for generating one output value for (N—X) of the counts and a different output value for X other of the counts and a comparator (14) responsive to the output count of the resettable counter and the output value of the logic function generator to generate a compare equal signal (as appropriate) of the two outputs, such signal resetting the resettable counter to its initial state and advancing the contents of the time of day clock by one unit.

2. Apparatus as claimed in claim 1 characterized in that the logic function generator comprises an externally settable control register (29), decision logic (28, 30) and an output gating complex (32, 34, 36) connected to receive a set of binary numbers, the current contents of the control register presetting both the decision logic and the gating complex, and the low order contents of the time of day clock being applied to the decision logic which generates signals (M, $\overline{M}$) causing the gating complex to gate particular ones of said binary numbers as said one output value and said different output value.

**Revendications**

1. Dispositif de traitement de données fonctionnant par cycles de durée T sous la commande d'une horloge de processeur et comprenant une horloge de temps réel (10) comptant en intervalles de durée théorique D et commandée par l'horloge de processeur par l'intermédiaire d'une logique de commande (14, 16, 18) qui comprend un compteur restaurable pour générer, en réponse à l'horloge de processeur, un compte comulatif des impulsions d'horloge de processeur générées depuis la dernière restauration pour produire, au cours d'une période de K cycles d'horloge de processeur consécutifs, N intervalles de comptage de l'horloge de temps réel dont une partie (N—X) correspond à R cycles consécutifs d'horloge de processeur et dont l'autre partie correspond à un nombre entier autre que R cycles consécutifs d'horloge de processeur, où $ND=KT$ et $D=(R\pm X/N)^T$, T, N, D, K, T, R, X étant des entiers positifs et R étant l'entier le plus proche de D/T, caractérisé en ce que la logique de commande comprend également un générateur de fonction logique (18) en réponse au contenu d'ordre inférieur de l'horloge de temps réel, qui définit un nombre au moins égal à N, pour générer une valeur de sortie pour (N—X) des comptes et une valeur de sortie différente pour les X restants des comptes et un comparateur (14) en réponse au compte de sortie du compteur restaurable et à la valeur de sortie du générateur de fonction logique pour générer un signal d'égalité (si c'est le cas) des deux sorties, ce signal restaurant le compteur restaurable à son état initial et avançant le contenu de l'horloge de temps réel d'une unité.

2. Dispositif selon la revendication 1 caractérisé en ce que le générateur de fonction logique comprend un registre de commande réglable extérieurement (29), une logique de décision (28, 30) et un complexe de transfert de sortie (32, 34, 36) connecté pour recevoir un ensemble de nombres binaires, le contenu courant du registre de commande pré-réglant à la fois la logique de décision et le complexe de transfert, le contenu d'ordre inférieur de l'horloge de temps réel étant appliqué à la logique de décision qui génère des signaux (M, $\overline{M}$) provoquant le transfert par le complexe de transfert de nombres binaires particuliers parmi lesdits nombres binaires en tant que première valeur de sortie et valeur de sortie différente.

**Patentansprüche**

1. Datenverarbeitungsgerät, das in Zyklen der Dauer T unter der Steuerung eines Prozessor-Taktgebers arbeitet und einen Taktgeber (10) für die Tageszeit einschließt, der in Intervallen der imaginären Dauer D zählt und von dem Prozessor-Taktgeber über Steuerlogik (14, 16, 18) gesteuert wird, die einen rückstellbaren Zähler einschließt, der auf den Prozessor-Taktgeber anspricht zum Erzeugen eines kumulativen Zählergebnisses der Prozessor-Taktimpulse seit der letzten Rückstellung, um in einer Periode von K aufeinanderfolgenden Prozessor-Taktzyklen N Zählintervalle für den Taktgeber für die Tageszeit zu erzeugen, von denen (N—X) jeweils R aufeinanderfolgenden Prozessor-Taktzyklen entsprechen und von denen jeweils X einer ganzen, von R verschiedenen Anzahl aufeinanderfolgender Prozessor-Taktzyklen entsprechen, wobei $ND=KT$ und $D=(R\pm X/N)T$ ist und T, N, D, K, T, R, X positive ganze Zahlen sind und R die nächste ganze Zahl zu D/T ist, dadurch gekennzeichnet, daß die Steuerlogik auch einen Generator (18) für eine logische Funktion einschließt, der auf die niederstelligen Inhalte des Taktgebers für die Tageszeit anspricht, die eine Zahl, die zumindest gleich N ist, definieren zum Erzeugen eines Ausgangswertes für (N—X) der Zählergebnisse und einen anderen Ausgangswert für X Zählergebnisse und einen Vergleicher (14), der auf das Ausgangszählergebnis des rückstellbaren Zählers und den Ausgangswert des Generators für die logische Funktion anspricht, um (gegebenenfalls) ein Signal über die Gleichheit der verglichenen Ausgangssignale zu erzeugen, des den rückstellbaren Zähler auf seinen Anfangszustand rückstellt und den Inhalt des Taktgebers für die Tageszeit um eine Einheit erhöht.

2. Gerät nach Anspruch 1, dadurch gekennzeichnet, daß der Generator für die logische Funktion ein extern setzbares Steuerregister (29), eine Entscheidungslogik (28, 30) und einen Ausgangs-Durchschaltkomplex (32, 34, 36) enthält, der zum Empfangen eines Satzes von Binärzahlen verbunden ist, wobei die laufenden Inhalte des Steuerregisters sowohl die Entscheidungslogik als auch den Durchschaltkomplex voreinstellen und die niederstelligen Inhalte des Taktgebers für die Tageszeit der Entscheidungslogik zugeführt werden, die die Signale (M, $\overline{M}$) erzeugt und den Durchschaltkomplex veranlaßt, bestimmte der Binärzahlen als den genannten einen Ausgangswert und den genannten anderen Ausgangswert durchzuschalten.

FIG. 1

# FIG. 2

EXAMPLE FOR 10 OUT OF 32 = B$\bar{C}$ + BCD$\bar{E}$